(19) Europäisches Patentamt / European Patent Office / Office européen des brevets

(11) **EP 1 758 282 A1**

(12) **EUROPEAN PATENT APPLICATION**

(43) Date of publication:
**28.02.2007 Bulletin 2007/09**

(51) Int Cl.:
**H04B 17/00** (2006.01)    **G01R 31/28** (2006.01)

(21) Application number: **06017351.5**

(22) Date of filing: **21.08.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **25.08.2005 JP 2005244581**<br>**26.12.2005 JP 2005372787**<br>**25.05.2006 JP 2006145711**<br>**26.06.2006 JP 2006175251**<br><br>(71) Applicant: **Yokogawa Electric Corporation**<br>**Tokyo 180-8750 (JP)** | (72) Inventors:<br>• **Ito, Takeshi**<br>**Musashino-shi**<br>**Tokyo 180-8750 (JP)**<br>• **Terai, Kenji**<br>**Musashino-shi**<br>**Tokyo 180-8750 (JP)**<br><br>(74) Representative: **Goddar, Heinz J.**<br>**FORRESTER & BOEHMERT**<br>**Pettenkoferstrasse 20-22**<br>**80336 München (DE)** |

(54) **Test apparatus**

(57)     A test apparatus, includes: a phase modulation unit for receiving a test signal of a communication mode of a test target among a plurality of different communication modes, and modulates the received test signal by a phase modulation mode for use in the communication mode of the test target; a phase shift unit for shifting a phase of the modulated signal by a predetermined amount corresponding to the communication mode of the test target, with respect to each input of the modulated signal; a splitting unit for splitting the shifted signal into an I-component and a Q-component; a filter unit for shaping respective signals of the I-component and the Q-component by using a predetermined filter; and a synthesizing unit for synthesizing the shaped signals of the I-component and the Q-component, and for forming the synthesized signals into a transmission signal, wherein the predetermined filter for use in the filter unit is a filter for use in one of the plurality of different communication modes, and is a filter obtained as a main component when a predetermined operation is performed for modulation signals for use in another communication mode.

EP 1 758 282 A1

**Description**

Field of the Invention

The present invention relates to a test apparatus capable of making tests for a plurality of different communication modes.

Description of Related Art

In recent years, in a mobile communication system for cellular phones and the like, systems using various communication modes such as Wideband-Code Division Multiple Access (W-CDMA), Global System for Mobile Communications (GSM), and Enhanced Data GSM Environment (EDGE) have been put into practical use. In accordance with the above situation, a test apparatus which tests transmitting and receiving characteristics of a terminal instrument for a plurality of different communication modes, has been proposed (for example, refer to JP-3017955 and JP-Tokukai-2005-12274A). In the test apparatus as described above, switching between the modes, which corresponds to the communication modes (for example, mode switching between the W-CDMA and the GSM), has been performed by rewriting a program of Field Programmable Gate Array (FPGA) mounted in an inside of the apparatus.

However, in the conventional test apparatus, since the mode switching corresponding to the communication modes has been performed by rewriting the program of the FPGA as described above, there has been a problem that the mode switching cannot be implemented easily and simply. When a scale of the FPGA is expanded and the existing hardware is changed in order to avoid this problem, there has been a problem that manufacturing cost of the test apparatus is increased.

SUMMARY OF THE INVENTION

It is an object of the present invention to enable communication tests in the plurality of different communication modes without changing the existing hardware or rewriting the program of the FPGA.

In order to solve the problem, in accordance with a first aspect of the present invention, a test apparatus, comprises:

a phase modulation unit for receiving a test signal of a communication mode of a test target among a plurality of different communication modes, and modulates the received test signal by a phase modulation mode for use in the communication mode of the test target;

a phase shift unit for shifting a phase of the modulated signal by a predetermined amount corresponding to the communication mode of the test target, with respect to each input of the modulated signal;

a splitting unit for splitting the shifted signal into an I-component and a Q-component;

a filter unit for shaping respective signals of the 1-component and the Q-component by using a predetermined filter; and

a synthesizing unit for synthesizing the shaped signals of the I-component and the Q-component, and for forming the synthesized signals into a transmission signal,

wherein the predetermined filter for use in the filter unit is a filter for use in one of the plurality of different communication modes, and is a filter obtained as a main component when a predetermined operation is performed for modulation signals for use in another communication mode.

Hence, it becomes possible to realize the communication tests in the plurality of different communication modes by the same circuit configuration without changing the existing hardware or rewriting the program of the FPGA.

Moreover, it is preferable that the predetermined filter for use in the filter unit is a Laurent filter obtained as a main component of Laurent decomposition of a GMSK signal.

Furthermore, it is preferable that the test apparatus further comprises: a normalization unit for normalizing amplitudes of the I-component and the Q-component which are processed by the filter unit.

Hence, the amplitudes of the I-component and the Q-component, which are filter-processed, are normalized, thus making it possible to generate a signal in which an error from an original signal value is small.

Moreover, it is preferable that the normalization unit outputs values obtained by dividing the I-component and the Q-component by an absolute value of a complex signal obtained by synthesizing the I-component and the Q-component, as signals in which the amplitudes are normalized.

Furthermore, it is preferable that the test apparatus comprises:

a correction circuit for calculating correction values of output signals of the Laurent filter by using a filter obtained as a second component of the Laurent decomposition of the GMSK signal; and

an addition unit for adding the correction values calculated by the correction circuit to the output signals of the Laurent filter.

Hence, the correction values obtained from the second component of the Laurent decomposition are added to the signals filter-processed by the Laurent filter obtained as the main component (first component) of the Laurent decomposition of the GMSK signal, and the amplitudes thereof are normalized, thus making it possible to generate high-precision signals usable as measuring tools.

In accordance with a second aspect of the present invention, a test apparatus, comprises:

a splitting unit which is a filter for use in one of a plurality of different communication modes, the splitting unit receiving a test signal in which an I-component and a Q-component are shaped, synthesized and transmitted by a first filter obtained as a main component when a predetermined operation is performed for modulation signals for use in another communication mode, or receiving another test signal which is equated to the test signal, each of the test signal and the another test signal being a signal of a communication mode of a test target among the plurality of different communication modes, and splitting the received test signal into the I-component and the Q-component;

a filter unit for removing inter-symbol interferences for respective signals of the split I-component and Q-component by using a second filter;

a synthesizing unit for synthesizing the respective signals of the I-component and the Q-component which are shaped by the filter unit;

a phase shift unit for shifting a phase of the synthesized signal by a predetermined amount corresponding to the communication mode of the test target, with respect to each input of the signal synthesized by the synthesizing unit; and

a demodulation unit for demodulating the shifted signal in a phase modulation mode for use in the communication mode of the test target,

wherein the second filter is a common filter among the plurality of different communication modes.

Moreover, it is preferable that the first filter is a Laurent filter obtained as a main component of Laurent decomposition of a GMSK signal.

Furthermore, it is preferable that the test apparatus further comprises:

a correlation detection unit for detecting a correlation between a pattern of the signal shifted by the phase shift unit and a known pattern; and

a symbol timing regeneration unit for regenerating symbol timing by detecting timing when a value of the detected correlation becomes the maximum,

wherein the demodulation unit demodulates the shifted signal based on the regenerated symbol timing.

Hence, the inter-symbol interferences and the symbol rotation which are generated on a transmitting side, can be removed from the received signal, and the symbol timing can be regenerated with good accuracy.

Moreover, it is preferable that a parameter of the phase shift unit and the known pattern inputted to the correlation detection unit are changed in response to the different communication modes.

Furthermore, it is preferable that the demodulation unit comprises the phase shift unit, the correlation detection unit, the symbol timing regeneration unit, and the demodulation unit, and

a plurality of the demodulation circuits in which the parameters of the phase shift units and the known patterns inputted to the correlation detection units are set in response to the different communication modes are provided in parallel.

BRIEF DESCRIPTION OF THE DRAWINGS

The present invention will become fully understood from the detailed description given hereinafter and the accompanying drawings given by way of illustration only, and thus are not intended as a definition of the limits of the present invention, wherein:

FIG. 1 is a block diagram showing a configuration of a test apparatus on a transmitting side according to Embodiment 1 of the present invention;

FIG. 2 is a block diagram showing a configuration of a test apparatus on a receiving side according to Embodiment 1 of the present invention;

FIG. 3 is a view showing a constellation when a test for GSM is performed in the test apparatus on the transmitting side according to Embodiment 1;

FIG. 4 is a block diagram showing a configuration of a test apparatus on a transmitting side according to Embodiment 2 of the present invention;

FIG. 5 is a view showing a constellation when the test for the GSM is performed by the test apparatus on the transmitting side according to Embodiment 2;

FIG. 6 is a block diagram partially showing a configuration of a test apparatus on a transmitting side according to Embodiment 3 of the present invention;

FIG. 7 is a block diagram showing one of application examples of the test apparatus according to Embodiment 3;

FIG. 8 is a block diagram of a modulation circuit;

FIG. 9 is a block diagram showing a specific example of a demodulation circuit; and

FIG. 10 is a block diagram showing another specific example of the demodulation circuit.

## DETAILED DESCRIPTION OF THE PREFERRED EMDODIMENTS

A description will be made below of Embodiment 1 and Embodiment 2 of the present invention with reference to the drawings.

[Embodiment 1]

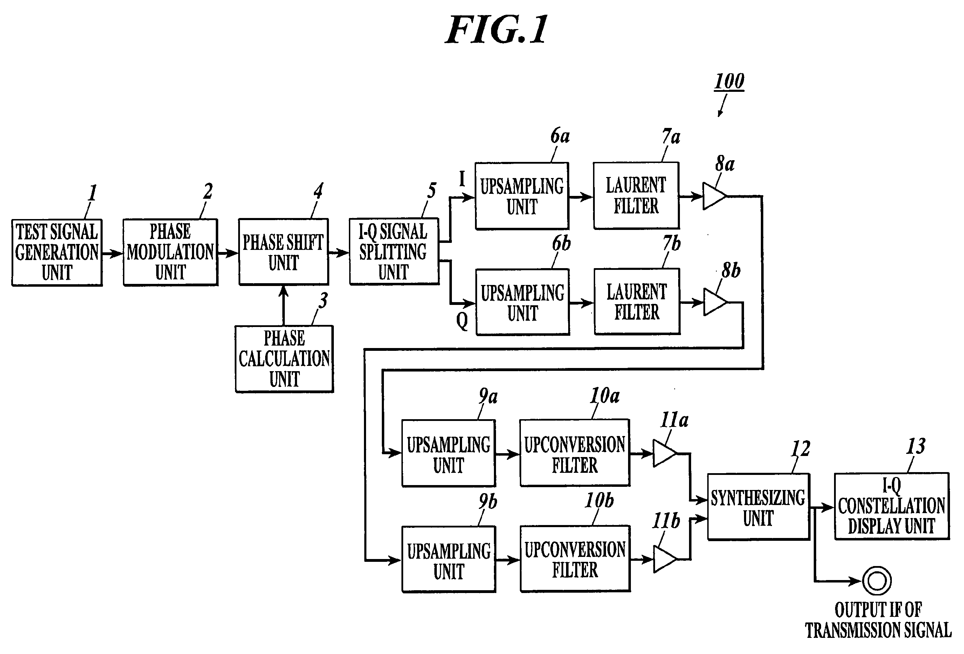

FIG. 1 shows a configuration of a test apparatus 100 on a transmitting side according to Embodiment 1 of the present invention. The test apparatus 100 is an apparatus capable of transmission tests for two transmission modes (GSM and EDGE). As shown in FIG. 1, the test apparatus 100 comprises a test signal generation unit 1, a phase modulation unit 2, a phase calculation unit 3, a phase shift unit 4, an I-Q signal splitting unit 5 as a splitting unit, upsampling units 6a and 6b, Laurent filters 7a and 7b as a filter unit and a first filter, amplifiers 8a and 8b, upsampling units 9a and 9b, upconversion filters 10a and 10b, amplifiers 11a and 11b, a synthesizing unit 12, and an I-Q constellation display unit 13.

In the case of the GSM, the test signal generation unit 1 generates, as a test signal, a signal having a random sequence formed of 0 and 1. In the case of the EDGE, the test signal generation unit 1 generates, as such a test signal, a signal having a random sequence formed of integers of 0 to 7. Then, the test signal generation unit 1 outputs these generated signals to the phase modulation unit 2. Note that a signal created based on a standard of the GSM or the EDGE may also be used as the test signal.

In the case of the GSM, the phase modulation unit 2 modulates the test signal by using Binary Phase Shift Keying (BPSK) as a phase modulation mode. In the case of the EDGE, the phase modulation unit 2 modulates the test signal by using 8-Phase Shift Keying (8-PSK) as such a phase modulation mode. Then, the phase modulation unit 2 outputs the modulated signal to the phase shift unit 4. The signal outputted from the phase modulation unit 2 is a complex signal which represents a point on an I-Q plane

(complex plane).

In the case of the BPSK, each one bit of the input signal is allocated to (1, 0) or (-1, 0) on the I-Q plane in response to 0 or 1. In the case of the 8-PSK, each 3 bits of the input signal are allocated on a circumference on the I-Q plane in response to (0, 0, 0) to (1, 1, 1) values. A method of allocating the bits on the I-Q plane includes, for example, a method of rotating a phase of the signal in response to the input values, a method of outputting values corresponding to the input values by using a conversion table, and the like. If the phase modulation mode (BPSK or 8-PSK) is given, then a bit length (1-bit or 3-bit) where the bits are treated as a lump is decided, and a rotation angle or the conversion table is decided. Accordingly, it is possible to use the same circuit in both of the phase modulation modes which are the BPSK and the 8-PSK.

The phase calculation unit 3 calculates the phase for rotating (shifting) the complex signal inputted to the phase shift unit 4 every time when the complex signal is inputted thereto, and outputs the calculated phase to the phase shift unit 4. In the case of the GSM, the phase calculation unit 3 performs processing for increasing the phase of the complex signal n/2 by n/2 from 0 (0, n/2, ($\Pi$/2)$\times$2...). In the case of the EDGE, the phase calculation unit 3 performs processing for increasing the phase of the complex signal 3$\Pi$/8 by 3n/8 from 0 (0, 3n/8, (3$\Pi$/8)$\times$2, (3$\Pi$/8)$\times$3...). Specifically, the phase calculation unit 3 includes an integer generation unit which sequentially generates integers 0, 1, 2, 3..., and a multiplying unit which multiplies the generated integers by n/2 or 3n/8, and the integer generation unit repeatedly generates the integers of 0, 1, 2, 3... in order until the rotation angle of the complex signal becomes an integral multiple of 2n.

The phase shift unit 4 rotates (shifts) the complex signal inputted for each sample data by an amount of the phase inputted from the phase calculation unit 3, and outputs the shifted complex signal to the I-Q signal splitting unit 5. The phase of the complex signal is shifted as described above, and thus, an effect that the output signals do not take the same value even if the same signals are continuously inputted thereto, is caused.

For example, when signals having the same values, for example, (1, 0), (1, 0), (1, 0), (1, 0), are continuously inputted to the phase shift unit 4 in the transmission test for the GSM, the input signals take different values such as (1, 0), (0, 1), (-1, 0), (0, -1) by rotating (initially, the rotation is not performed) the complex signals n/2 by n/2 for each input of the sample data, thus making it possible to output signals corresponding to differential coding of the GSM standard.

The I-Q signal splitting unit 5 splits the signal inputted from the phase shift unit 4 into an I-component (in-phase component) and a Q-component (quadrature component).

The upsampling unit 6a upsamples a signal of the I-component inputted thereto by a factor of 27, and outputs the upsampled signal to the Laurent filter 7a. The upsampling unit 6b upsamples a signal of the Q-component inputted thereto by a factor of 27, and outputs the upsampled signal to the Laurent filter 7b.

The Laurent filter 7a shapes the signal of the I-component inputted thereto, and outputs the shaped signal to the amplifier 8a. The Laurent filter 7b shapes the signal of the Q-component inputted thereto, and outputs the shaped signal to the amplifier 8b. For the purpose of shaping the signals, a Gaussian filter is usually used in the GSM, and the Laurent filter is usually used in the EDGE. However, the Laurent filter is obtained as a main component when a Gaussian filtered Minimum Shift Keying (GMSK) signal is subjected to Laurent decomposition (linearization of the GMSK). In detail, the above-described main component is a main component of the Laurent decomposition of the GMSK signal which is obtained by performing FSK modulation for an NRZ signal which is subjected to band limitation by the Gaussian filter, by a modulation index of 0.5. Accordingly, also in the case of performing the test for the signal of the GSM, it becomes possible to use the Laurent filter instead of a GMSK modulation circuit to be originally used.

The amplifiers 8a and 8b adjust (amplify) amplification values of the signals of the I-component and the Q-component, which are inputted from the Laurent filters 7a and 7b, respectively. Note that amplification factors in the amplifiers 8a and 8b are decided in response to amplification values of response characteristics of the Laurent filters 7a and 7b.

The upsampling unit 9a upsamples a signal of the input I-component by a factor of 4, and outputs the upsampled signal to the upconversion filter 10a. The upsampling unit 9b upsamples a signal of the input Q-component by a factor of 4, and outputs the upsampled signal to the upconversion filter 10b.

The upconversion filter 10a deletes an extra alias signal from the signal of the input I-component, and outputs the signal to the amplifier 11a. The upconversion filter 10b deletes an extra alias signal from the signal of the input Q-component, and outputs the signal to the amplifier 11b.

The amplifiers 11a and 11b adjust (amplify) amplification values of the signals of the I-component and the Q-component, which are inputted from the upconversion filters 10a and 10b, respectively. Note that amplification factors in the amplifiers 11a and 11b are decided in response to amplification values of response characteristics of the upconversion filters 10a and 10b.

The synthesizing unit 12 synthesizes the signals of the I-component and the Q-component, which are inputted from the amplifiers 11a and 11b, and outputs the synthesized signal as an output of an intermediate frequency (IF) of a transmission signal to a radio frequency (RF) unit (not shown) at a subsequent stage. The signal outputted from the synthesizing unit 12 is converted into an RF signal for use in cellular phones in the RF unit, and is transmitted toward a cellular phone to be tested. The signal synthesized by the synthesizing unit 12 is a complex signal which represents a point on the I-Q plane.

The I-Q constellation display unit 13 includes a display such as a liquid crystal display (LCD), and displays a constellation in which the complex signals inputted from the synthesizing unit 12 are plotted on the I-Q plane. In such a manner as described above, a signal in which a sampling rate is 108 times that of the original signal can be obtained.

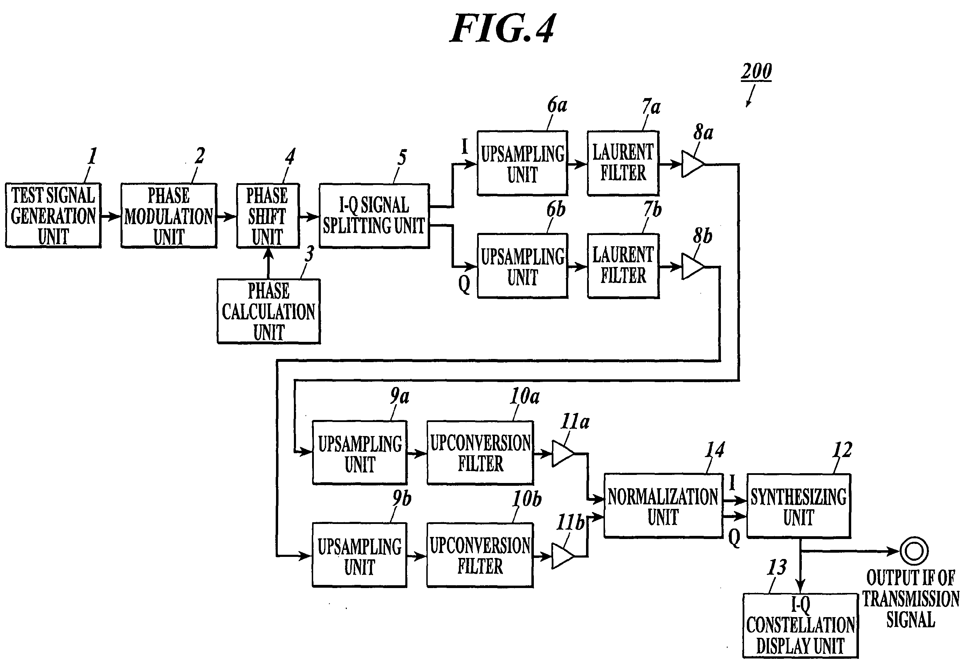

Note that Embodiment 1 shows the case where 27 times upsampling and 4 times upsampling are performed before and after the Laurent filters, respectively in order to obtain the signal in which the sampling rate is 108 times that of the original signal; however, a multiplying factor of each upsampling and a combination of the multiples for the purpose of realizing the desired multiplying factor are not limited to those in the above-described case, and just need to be decided in accordance with implementation of the system. Moreover, though FIG. 1 shows the case where the amplification values are adjusted after the 4 times upsampling is performed, the amplification values may also be adjusted before the upsampling. Furthermore, though FIG. 1 (and FIG. 4 to be described later) shows the case where the I-Q constellation display unit 13 is provided on the test apparatus on the transmitting side, a configuration in which the I-Q constellation display unit 13 is not provided may also be adopted.

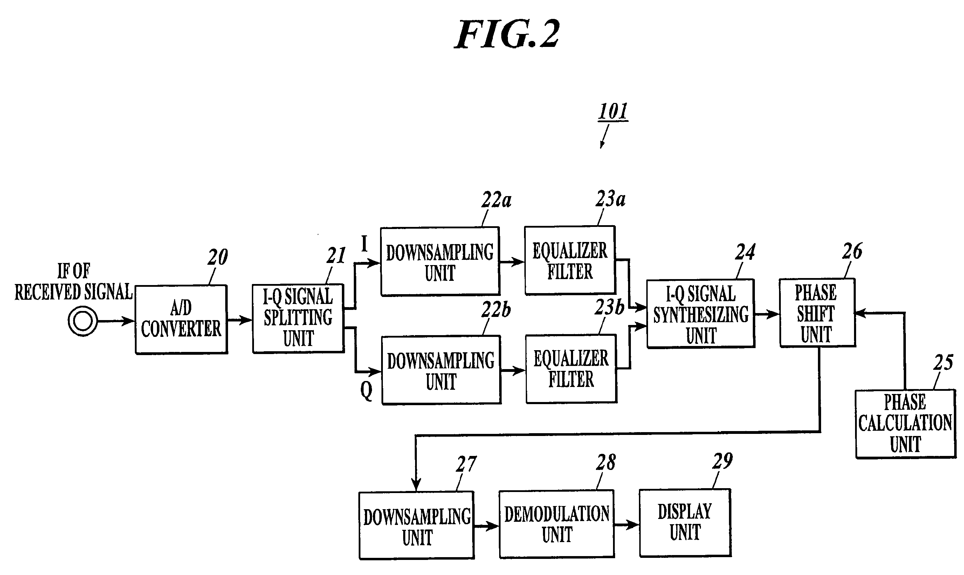

FIG. 2 shows a configuration of a test apparatus 101 on a receiving side according to Embodiment 1 of the present invention. The test apparatus 101 is an apparatus capable of reception tests for the two transmission modes (GSM and EDGE). As shown in FIG. 2, the test apparatus 101 comprises an A/D converter 20, an I-Q signal splitting unit 21 as a splitting unit, downsampling units 22a and 22b, equalizer filters 23a and 23b as a filter unit and a second filter, an I-Q signal synthesizing unit 24 as a synthesizing unit, a phase calculation unit 25, a phase shift unit 26, a downsampling unit 27, a demodulation unit 28, and a display unit 29.

A signal received by the test apparatus 101 is any one of a signal according to the GSM standard of the GMSK modulation mode, which is modulated according to the BPSK, rotated by n/2 for each sample data, and processed by the Gaussian filter, and a signal according to the EDGE standard, which is modulated according to the 8-PSK, rotated by 3n/8 for each sample data, and processed by the Laurent filter.

The A/D converter 20 converts an intermediate frequency (IF) output of the received signal into a digital signal, and outputs the digital signal to the I-Q signal splitting unit 21. The I-Q signal splitting unit 21 splits the signal into an I-component and a Q-component, and outputs the 1-component and the Q-component to the downsampling units 22a and 22b, respectively.

The downsampling unit 22a downsamples a signal of the input I-component by a factor of 1/9, and outputs the downsampled signal to the equalizer filter 23a. The downsampling unit 22b downsamples a signal of the input Q-component by a factor of 1/9, and outputs the downsampled signal to the equalizer filter 23b.

The equalizer filters 23a and 23b remove inter-symbol interferences from the signals of the input I-component and the input Q-component and output them to the I-Q signal synthesizing unit 24. Here, the same equalizer filters are used in both of the communication modes which are the GSM and the EDGE.

The I-Q signal synthesizing unit 24 synthesizes the signals of the I-component and the Q-component, from which the inter-symbol interferences are removed, forms the synthesized signal into a complex signal, and outputs the complex signal to the phase shift unit 26.

The phase calculation unit 25 calculates the phase for rotating (shifting) the complex signal inputted to the phase shift unit 26 every time when the complex signal is inputted thereto, and outputs the calculated phase to the phase shift unit 26. In the case of the GSM, the phase calculation unit 25 performs processing, for example, for reducing the phase of the complex signal $\Pi/(2\times12)$ by $\Pi/(2\times12)$ from 0 (0, $-\Pi/(2\times12)$, $-(\Pi/(2\times12))\times2$...). In the case of the EDGE, the phase calculation unit 25 performs processing, for example, for reducing the phase of the complex signal $3\Pi/(8\times12)$ by $3\Pi/(8\times12)$ from 0 (0, $-3\Pi/(8\times12)$, $-(3\Pi/(8\times12))\times2$, $-(3\Pi/(8\times12))\times3$...). Specifically, the phase calculation unit 25 includes an integer generation unit which sequentially generates integers 0, 1, 2, 3..., and a multiplying unit which multiplies the generated integers by $(-n/(2\times12))$ or $(-3n/(8\times12))$, and the integer generation unit repeatedly generates integers of 0, 1, 2, 3... in order until the rotation angle of the complex signal becomes an integral multiple of 2n. Here, "$\times12$" in the denominator is an item for matching them to the sampling of the multiple at this point of time, and when the multiple of the sampling is different, this value is matched to it.

The phase shift unit 26 rotates (shifts) the complex signal inputted from each sample data by an amount of the phase inputted from the phase calculation unit 25, and outputs the shifted complex signal to the downsampling unit 27.

The downsampling unit 27 downsamples the signal inputted from the phase shift unit 26 by a factor of 1/12, and outputs the downsampled signal to the demodulation unit 28.

The demodulation unit 28 demodulates the input signal according to a demodulation mode corresponding to the phase modulation mode (BPSK or 8-PSK), and outputs the demodulated signal on the display unit 29. The demodulation unit 28 divides the I-Q plane into two areas by plus or minus of an I-axis, or divides the I-Q plane into eight areas by every n/4 while taking the origin as a center. Then, the demodulation unit 28 determines which of the areas such an input signal is located, and outputs a demodulated signal corresponding to the position of the input signal. Alternatively, with regard to both of the BPSK and the 8-PSK, the demodulation unit 28 may output the demodulated signals in response to which of the eight areas the input signal is located. In this case, if the phase modulation mode is the BPSK, for example, positive areas with respect to the I-axis among the eight areas can be defined as 1, and negative areas with respect to the I-axis can be defined as 0. Hence, it is possible to use the same circuit for both of the demodulation modes corresponding to the BPSK and the 8-PSK. Note that, though there is some possibility that the phase of the signal inputted to the demodulation unit 28 is rotated, in this case, the demodulation unit 28 corrects the rotated phase by pattern matching of the known bit pattern embedded in a part of the received signal.

The display unit 29 includes a display such as an LCD, and displays the signal inputted from the demodulation unit 28.

Note that Embodiment 1 shows the case where 1/9 time downsampling and 1/12 time downsampling are performed at previous stages of the equalizer filters 23a and 23b and at a subsequent stage of the phase shift unit 26, respectively in order to divide the sampling rate of the input signal by 1/108; however, the multiplying factor of the downsampling and a combination of the multiples for the purpose of realizing the desired multiplying factor are not limited to these, and just need to be decided in accordance with the implementation of the system.

Moreover, a configuration in which the output signals from the amplifiers 11a and 11b of FIG. 1 are inputted to the downsampling units 22a and 22b of FIG. 2, and an error rate is measured based on a test signal outputted from the test signal generation unit 1 of FIG. 1 and on the output signal from the demodulation unit 28, may also be adopted.

As described above, in the test apparatus 100 of FIG. 1, the Laurent filter obtained as a decomposed component of the GMSK signal is used instead of the GMSK signal for use in the GSM, thus making it possible to output the signal of the GSM by using the Laurent filter, and to realize the tests in both of the communication modes which are the GSM and the EDGE by the same circuit configuration.

Hence, only by changing some parameters in the same circuit, the tests (generation/analysis) for the signals can be performed easily while switching the communication mode between the GSM and the EDGE. The changeable parameters are as follows.

<In case of EDGE: transmitting side>

(1) Number of integers generated in test signal generation unit = 8;
(2) Number of phase parameters required for phase modulation = 8
(phase parameters: 0, n/4, n/2, 3n/4, n, 5n/4, 3n/2, and 7n/4); and
(3) Constant required for phase shift = 3n/8

<In case of EDGE: receiving side>

(1) Constant required for phase shift = -3n/(8×12); and
(2) Number of phase parameters required for demodulation = 8

<In case of GSM: transmitting side>

(1) Number of integers generated in test signal generation unit = 2;
(2) Number of phase parameters required for phase modulation = 2
(phase parameters: 0, n); and
(3) Constant required for phase shift = n/2

<In case of GSM: receiving side>

(1) Constant required for phase shift: -n/(2Π×2); and
(2) Number of phase parameters required for demodulation = 2

As described above, according to the test apparatuses 100 and 101 of Embodiment 1, the transmission tests and the reception tests in both of the communication modes which are the GSM and the EDGE can be realized in the same circuit configuration of the FPGA. Accordingly, it is not necessary to expand the scale of the FPGA or to change the existing hardware, thus making it possible to reduce the manufacturing cost of the test apparatus.

[Embodiment 2]

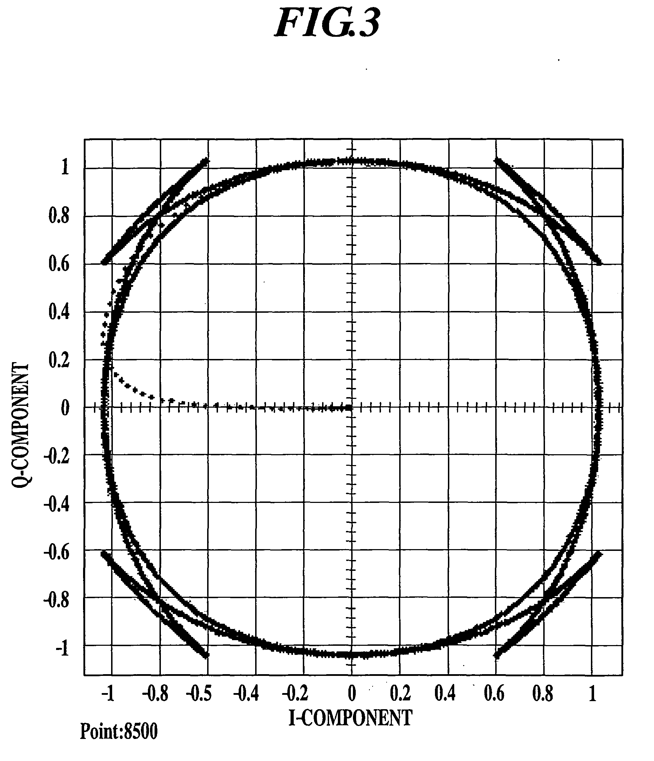

The constellation of the GSM has a feature that symbol points are plotted on the circumference of the I-Q plane. However, it is found that as in Embodiment 1, in the case of switching the GSM and the EDGE only by changing the parameters, and of making the transmission tests for the GSM and the EDGE by the same circuit, errors occur on the constellation of the GSM as shown in FIG. 3 because, instead of the GMSK signal to be originally used in the GSM, the Laurent filter obtained as the main component of the Laurent decomposition of the GMSK signal is used. Specifically, the symbol points of the constellation deviate from the circumference. It is thought that the errors are to an extent not to cause a problem in the actual communication; however, it is desirable that the errors should not occur in the test apparatus which makes a functional test for the cellular phones and the like.

Accordingly, in Embodiment 2, the signals generated in the test for the GSM will be corrected so that the symbol points of the constellation of the GSM can be plotted on the circumference. The errors of the constellation shown in FIG. 3 mainly occur in the amplitude direction of the signals, and accordingly, the amplitudes of the signals just need to be normalized. FIG. 4 shows a configuration of a test apparatus 200 on a transmitting side according to Embodiment 2. The test apparatus 200 includes a normalization unit 14, which normalizes the amplitudes of the signals, between the synthesizing unit 12 and the amplifiers 11a and 11b of the test apparatus 100 of Embodiment 1.

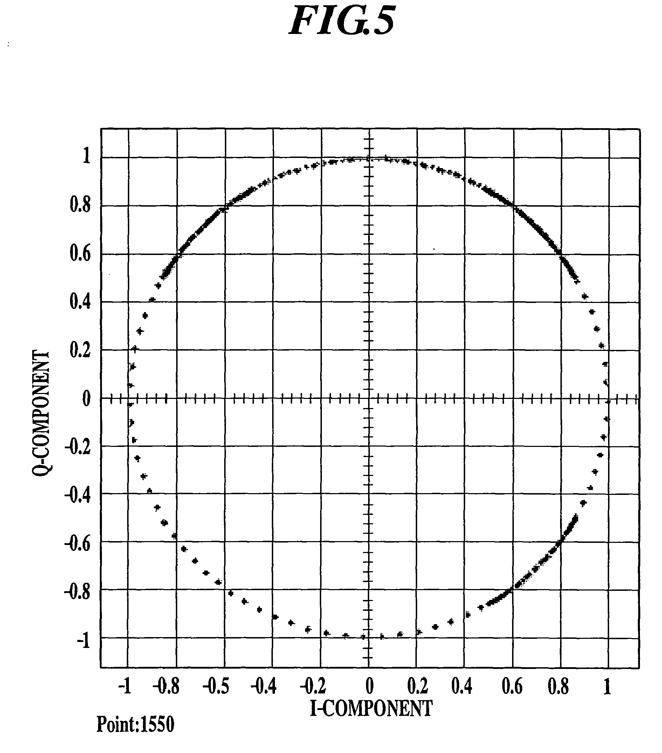

The normalization unit 14 first synthesizes the signals of the I-component and the Q-component, which are inputted from the amplifiers 11a and 11b, and forms the synthesized signals into the complex signal, and calculates an absolute value of the complex signal. Then, the signals of the I-component and the Q-component are divided by the absolute value and the amplitudes of the signals are normalized. Then, the signals of the I-component and the Q-component, in which the amplitudes are normalized, are outputted to the synthesizing unit 12. The amplitudes of the signals obtained by such normalization become 1, and the constellation of the GSM, which is displayed on the I-Q constellation display unit 13, will be plotted on a circumference with a radius of 1 as shown in FIG. 5.

Note that a configuration in which a conversion table (table showing a relationship between input values and output values) for converting the inputted signals of the I-component and the Q-component into the normalized values is provided in a memory (not shown), and according to this conversion table, the inputted signals of the I-component and the Q-component are converted into the normalized values, may also be adopted. In the constellation of the GSM, which is shown in FIG. 3, the area on which the symbol points thereof are plotted is limited to the I-Q plane. Accordingly, when the conversion table is predefined for the I-component and the Q-component, in which the symbol points of the constellation are plotted on the limited area, the normalization processing can be performed at higher speed than in the case where the calculation of the absolute value and the division processing are performed for each input of the signals.

Note that a test apparatus on a receiving side according to Embodiment 2 is the same as the test apparatus 101 of Embodiment 1.

As described above, according to the test apparatus 200 of Embodiment 2, the signals generated in the test for the GSM are corrected to be normalized, the symbol points of the constellation are thus plotted on the circumference, and a constellation more approximate to that of the original GMSK can be realized, thus making it possible to enhance reliability of the test apparatus in the test for the GSM.

[Embodiment 3]

With regard to the test apparatus 200 of Embodiment 2, the method in which in the test for the GSM, the absolute value of the complex signal obtained by synthesizing the signals of the I-component and the Q-component is calculated, the respective signals of the I-component and the Q-component are divided by the absolute value, and the amplitudes are thus normalized, is shown. In Embodiment 3, a description will be made of a method in which in the test for the GSM, a signal value obtained from a second largest component (second component) of the Laurent decomposition of the GMSK signal is added to a signal value obtained from a main component (first component) of the Laurent decomposition thereof, and the amplitude of the signal is thus normalized.

First, a description will be made of the Laurent decomposition of the GMSK signal. The Laurent decomposition of the GMSK signal is represented as in Expression 1.

[Expression 1]

$$y(t') = \exp\left( j\frac{\pi}{2} \sum_{k} \alpha_k \int_{-\infty}^{t'-kT} g(u)du \right)$$

$$\approx \exp\left( j\frac{\pi}{2} \sum_{k=-\infty}^{n-3} \alpha_k \right) \prod_{k=n-3}^{n} \exp\left( j\frac{\pi}{2} \alpha_k \int_{-\infty}^{t'-kT} g(u)du \right)$$

$$= \sum_{n=-\infty}^{\infty} \sum_{k=0}^{7} \exp\left( j\frac{\pi}{2} A_{k,n} \right) c_k(t-nT) \qquad where \quad t \in \left[ nT, (n+1)T \right]$$

$$\ldots\ldots\ldots\ldots (1)$$

$A_{k,n}$ in Expression 1 is represented as in Expression 2.

[Expression 2]

$$A_{0,n} = \sum_{m=-\infty}^{n} \alpha_m \qquad\qquad A_{4,n} = \alpha_n + \alpha_{n-1} + \alpha_{n-2} + \sum_{m=-\infty}^{n-4} \alpha_m$$

$$A_{1,n} = \alpha_n + \sum_{m=-\infty}^{n-2} \alpha_m \qquad\qquad A_{5,n} = \alpha_n + \alpha_{n-2} + \sum_{m=-\infty}^{n-4} \alpha_m$$

$$A_{2,n} = \alpha_n + \alpha_{n-1} + \sum_{m=-\infty}^{n-3} \alpha_m \qquad\qquad A_{6,n} = \alpha_n + \alpha_{n-1} + \sum_{m=-\infty}^{n-4} \alpha_m$$

$$A_{3,n} = \alpha_n + \sum_{m=-\infty}^{n-3} \alpha_m \qquad\qquad A_{7,n} = \alpha_n + \sum_{m=-\infty}^{n-4} \alpha_m$$

$$\dots\dots\dots\dots (2)$$

The filter for use in the EDGE is the filter obtained as the main component of the above-described Laurent decomposition. Accordingly, in Embodiment 1 and Embodiment 2, the case in which the modulation signal according to the GMSK is generated by Expression 3 in which approximation is made only by the component of k=0 in Expression 1, is shown.

[Expression 3]

$$y(t') \approx \sum_{n=-\infty}^{\infty} \exp\!\left( j\frac{\pi}{2} A_{0,n} \right) c_0(t-nT)$$

$$= \sum_{n=-\infty}^{\infty} \exp\!\left( j\frac{\pi}{2} \underbrace{\sum_{m=-\infty}^{n} \alpha_m}_{W} \right) c_0(t-nT)$$

$$\dots\dots\dots\dots (3)$$

With regard to the components of k=1 to 7, which are ignored by the approximation shown in Expression 3, $c_1$ is 0.1 and $c_2$ to $c_7$ are 0.002 or less when $c_0$ is 1. Accordingly, there is hardly an influence even if the components of k=2 to 7 are ignored. However, the component of k=1 cannot be ignored when it is necessary to generate high-precision signals as measuring tools.
When the component of k=1 in Expression 1 is s(t'), s(t') is represented as in Expression 4.

[Expression 4]

$$s(t') = \sum_{n=-\infty}^{\infty} \exp\!\left( j\frac{\pi}{2} A_{1,n} \right) c_1(t-nT)$$

$$= \sum_{n=-\infty}^{\infty} \exp\!\left\{ j\frac{\pi}{2}\left( \alpha_n + \sum_{m=-\infty}^{n-2} \alpha_m \right) \right\} c_1(t-nT)$$

$$= \sum_{n=-\infty}^{\infty} \underbrace{\exp\!\left( j\frac{\pi}{2} \alpha_n \right)}_{X} \underbrace{\exp\!\left( j\frac{\pi}{2} \sum_{m=-\infty}^{n-2} \alpha_m \right)}_{Y} \underbrace{c_1(t-nT)}_{Z}$$

$$\dots\dots\dots\dots (4)$$

Here, the item Y of Expression 4 is the one in which n of the item W in the component of k=0, which is shown in Expression 3, is turned into n-2, and represents a signal of two symbols before. The item X of Expression 4 represents a current input signal, and the item Z thereof represents a filter. Accordingly, the component of k=1 can be generated in such a manner that the signal of two symbols before is modulated by the current input signal, and that the modulated signal is inputted to the filter.

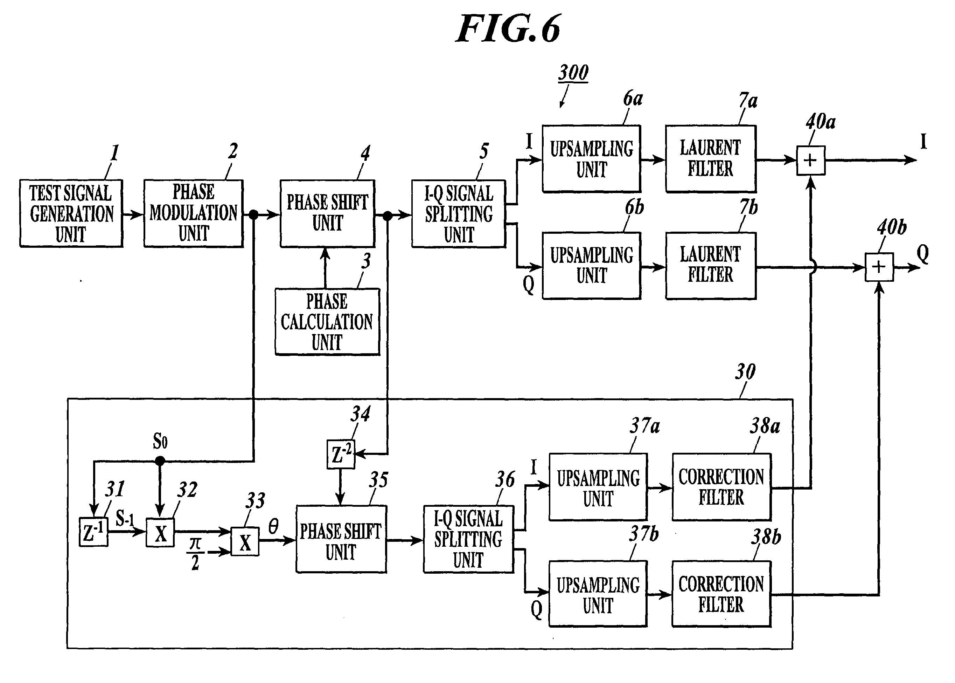

In order to generate the high-precision signals usable as the measuring tools, it is necessary to provide a correction circuit which calculates a correction value to be added to a signal value obtained from the main component (first component) of the Laurent decomposition. As a test apparatus on a transmitting side, which includes the correction circuit as described above, FIG. 6 shows a part of a configuration of a test apparatus 300 according to Embodiment 3. The test apparatus 300 has a configuration in which a correction circuit 30 and addition units 40a and 40b are added to the test apparatus 100 of FIG. 1. In the test apparatus 300, correction results by the correction circuit 30 are added by the addition units 40a and 40b in the test for the GSM; however, in the test of the EDGE, the correction results by the correction circuit 30 are not added.

As shown in FIG. 6, the correction circuit 30 comprises a delay element 31, multiplying units 32 and 33, a delay element 34, a phase shift unit 35, an I-Q signal splitting unit 36, upsampling units 37a and 37b, and correction filters 38a and 38b.

The delay element 31 delays a signal inputted from the phase modulation unit 2 by 1 symbol, and outputs the delayed signal to the multiplying unit 32. The multiplying unit 32 multiplies the current input signal from the phase modulation unit 2 and the signal of 1 symbol before, which is inputted from the delay element 31, and outputs a result of the multiplication to the multiplying unit 33. The multiplying unit 33 multiplies the results outputted from the multiplying unit 32 by n/2, and outputs a result of the multiplication to the phase shift unit 35. The result of the multiplication in the multiplying unit 33 is a symbol rotation amount in the phase shift unit 35.

It becomes possible to output a signal corresponding to differential coding for the correction by the delay element 31, the multiplication units 32 and 33, and the phase shift unit 35. Table 1 shows relationships among the current input signal So from the phase modulation unit 2 to the delay element 31 and the multiplication unit 32, the signal $S_{-1}$ of 1 symbol before, and the symbol rotation amount θ in the phase shift unit 35. The correction circuit 30 of the test apparatus 300 is applied to the modulation in the case of the GMSK, and the modulation in the case of the GMSK is the BPSK. Accordingly, the input signal to the differential coding portions becomes ±1, and the symbol rotation amount becomes ±π/2.

[Table 1]

| Current input $S_0$ | Input of 1 symbol before $S_{-1}$ | Symbol rotation amount θ |
|---|---|---|
| +1 | +1 | +π/2 |
| +1 | -1 | -π/2 |
| -1 | +1 | -π/2 |
| -1 | -1 | +π/2 |

The delay element 34 delays a signal inputted from the phase shift unit 4 by 2 symbols, and outputs the delayed signal to the phase shift unit 35. The phase shift unit 35 shifts (rotates) the signal of 2 symbols before, which is inputted from the delay element 34, by an amount of the phase (symbol rotation amount θ) inputted from the multiplying unit 33, and outputs the shifted signal to the I-Q signal splitting unit 36.

The symbol rotations by the angle θ for the I-component and Q-component of the complex signal are represented as in Expression 5.

[Expression 5]

$$\begin{pmatrix} I' \\ Q' \end{pmatrix} = \begin{pmatrix} \cos\theta & -\sin\theta \\ \sin\theta & \cos\theta \end{pmatrix} \begin{pmatrix} I \\ Q \end{pmatrix}$$

$$\ldots\ldots\ldots\ldots (5)$$

In the case of θ=-π/2, then cosθ=0 and sinθ=-1 are established, and in the case of θ=+π/2, then cosθ=0 and

$\sin\theta=1$ are established. Thus, the symbol rotation in $-n/2$ is established as: $[I', Q']=[Q, -I]$, and the symbol rotation in $+n/2$ is established as: $[I', Q']=[-Q, I]$.

The I-Q signal splitting unit 36 splits the signal inputted from the phase shift unit 35 into the I-component and the Q-component.

The upsampling unit 37a upsamples the signal of the input I-component by a factor of 27 (same multiplying factor as that of the upsampling unit 6a), and outputs the upsampled signal to the correction filter 38a. The upsampling unit 37b upsamples the signal of the input Q-component by a factor of 27 (same multiplying factor as that of the upsampling unit 6b), and outputs the upsampled signal to the correction filter 38b.

The correction filters 38a and 38b are filters obtained as the second components (k=1) of the Laurent decomposition of the GMSK signal, and are represented as in the item Z of Expression 4. The correction filter 38a shapes the signal of the input I-component, and outputs the shaped signal to the addition unit 40a. The correction filter 38b shapes the signal of the input Q-component, and outputs the shaped signal to the addition unit 40b.

The addition unit 40a adds the signal (correction value) of the I-component inputted from the correction filter 38a to the signal of the I-component inputted from the Laurent filter 7a, and outputs the signal to the amplifier 8a (refer to FIG. 1) at the subsequent stage. The addition unit 40b adds the signal (correction value) of the Q-component inputted from the correction filter 38b to the signal of the Q-component inputted from the Laurent filter 7b, and outputs the signal to the amplifier 8b (refer to FIG. 1) at the subsequent stage.

Note that a test apparatus on a receiving side according to Embodiment 3 is the same as the test apparatus 101 of Embodiment 1.

As described above, according to the test apparatus 300 of Embodiment 3, the correction value calculated from the second component of the Laurent decomposition of the GMSK signal is added to the signal filter-processed by the Laurent filter obtained as the main component (first component) of the Laurent decomposition, and the amplitude is thus normalized. Thus, it becomes possible to generate the high-precision signals usable as the measuring tools. Moreover, since it is not necessary to provide a division circuit for the normalization, the test apparatus 300 is more advantageous than the test apparatus 200 of Embodiment 2 in terms of the operation speed and the circuit scale.

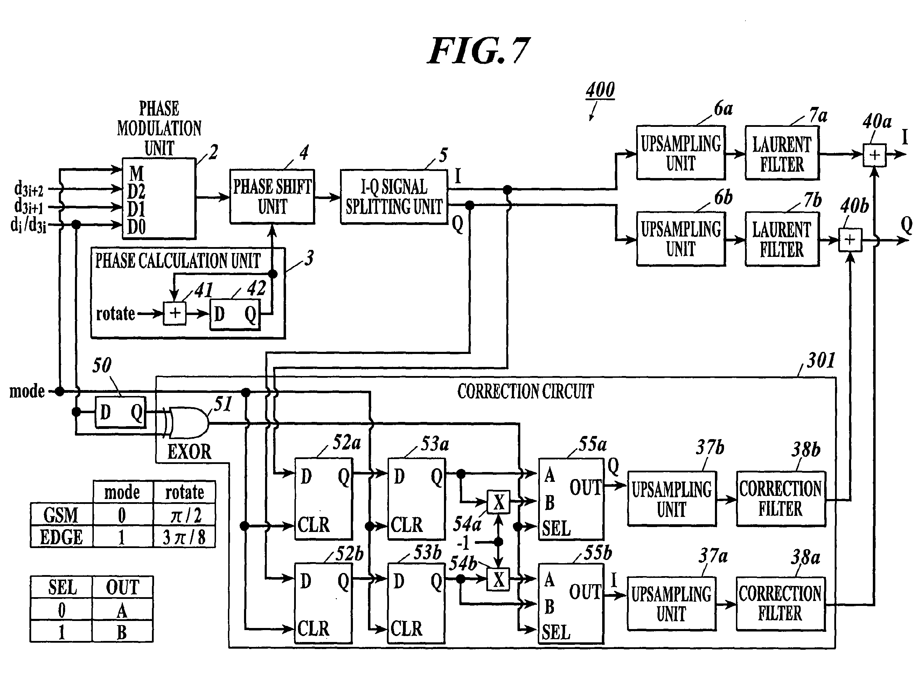

Next, a description will be made of a test apparatus 400 as one of application examples of the test apparatus 300 of Embodiment 3 with reference to FIG. 7. In FIG. 7, the same reference numerals are assigned to the same constituents as those of the test apparatus 300 of FIG. 6.

A phase modulation unit 2 of the test apparatus 400 includes an M terminal to which a signal mode (0 in the case of the GSM, 1 in the case of the EDGE) indicating a communication mode of a test target is inputted, and a D0 terminal, a D1 terminal, and a D2 terminal, to which test signals are inputted from the test signal generation unit 1. In the case of modulating the signals according to the BPSK mode (in the case of mode=0), each input signal is used 1 bit by 1 bit, and accordingly, signals $d_i$ ($d_0$, $d_1$, $d_2$...) are inputted to the D0 terminal, and the input of the signals to the D1 terminal and the D2 terminal is ignored. In the case of modulating the signals according to the 8-PSK mode (in the case of mode=1), each input signal is used 3 bits by 3 bits, and accordingly, signals $d_{3i}$ ($d_0$, $d_3$, $d_6$...) at intervals of 3 bits are inputted to the D0 terminal. In a similar way, signals $d_{3i+1}$ ($d_1$, $d_4$, $d_7$...) and signals $d_{3i+2}$ ($d_2$, $d_5$, $d_8$...) are inputted to the D1 terminal and the D2 terminal, respectively.

A phase calculation unit 3 is composed of an addition unit 41 and a register 42. The addition unit 41 adds a symbol rotation amount "rotate" preset in response to the communication mode to a symbol rotation amount of 1 symbol before, which is inputted from the register 42, and outputs the signal thus corrected to the register 42. The register 42 captures the signal inputted thereto from the addition unit 41, delays the signal by 1 symbol, and outputs the delayed signal to the phase shift unit 4, and in addition, makes feedback thereof to the addition unit 41. Here, the symbol rotation amount "rotate" preset in response to the communication mode is $n/2$ in the case of modulating the signal according to the BPSK mode, and is $3n/8$ in the case of modulating the signal according to the 8-PSK mode.

The signals $d_i$ or $d_{3i}$ inputted to the D0 terminal of the phase modulation unit 2 are further inputted to a register 50 and an EXOR 51. The register 50 delays the input signals by 1 symbol, and outputs the delayed signals to the EXOR 51.

A correction circuit 301 of the test apparatus 400 comprises the EXOR 51, registers 52a, 52b, 53a and 53b, multiplying units 54a and 54b, multiplexers 55a and 55b, upsampling units 37a and 37b, and correction filters 38a and 38b.

The EXOR 51 calculates exclusive ORs of the current input signals $d_i$ or $d_{3i}$ and the signals of 1 symbol before. Results of the calculation in the EXOR 51 are inputted to SEL terminals of the multiplexers 55a and 55b.

The signals of the I-components and the Q-components, which are split in the I-Q signal splitting unit 5, are inputted to D terminals of the registers 52a and 52b, and MODE is inputted to CLR terminals of the registers 52a and 52b. Moreover, signals outputted from Q terminals of the registers 52a and 52b are inputted to D terminals of the registers 53a and 53b, and MODE is inputted to CLR terminals of the registers 53a and 53b. Signals of the I-components of 2 symbols before are held by the registers 52a and 53a, and signals of the Q-components of 2 symbols before are held by the registers 52b and 53b. However, in the case (case of the EDGE) where MODE=1 is inputted to the registers 52a, 52b, 53a and 53b, the outputs from the correction circuit 301 to the addition units 40a and 40b become 0 by clearing the outputs of the respective registers to 0.

Each signal outputted from a Q terminal of the register 53a is inputted to the multiplying unit 54a and an A terminal of the multiplexer 55a. Each signal outputted from a Q terminal of the register 53b is inputted to the multiplying unit 54b and a B terminal of the multiplexer 55b.

The multiplying unit 54a multiplies each signal outputted from the Q terminal of the register 53a by -1, and outputs a result of the multiplication to a B terminal of the multiplexer 55a. The multiplying unit 54b multiplies each signal outputted from the Q terminal of the register 53b by -1, and outputs a result of the multiplication to an A terminal of the multiplexer 55b. It is possible to realize the multiplication by -1 in the multiplication units 54a and 54b by complementary operations.

When the input signals to the SEL terminals of the multiplexers 55a and 55b are 0, the multiplexers 55a and 55b select the input signals to the A terminals thereof, and output the selected input signals from OUT terminals thereof. When the input signals to the SEL terminals are 1, the multiplexers 55a and 55b select the input signals to the B terminals thereof, and output the selected input signals from the OUT terminals. Correspondence between the input signals $d_i$ and the signals which have been modulated according to the BPSK mode is represented as: $0 \rightarrow +1$; and $1 \rightarrow -1$. Accordingly, operations of the multiplexers 55a and 55b are controlled based on the calculation results of the exclusive ORs, thus making it possible to realize symbol rotations similar to those in Table 1.

The output signals from the OUT terminals of the multiplexers 55a and 55b are inputted as the Q-component and the I-component to the upsampling units 37a and 37a, respectively. The description has already been made of the upsampling units 37a and 37b and the correction filters 38a and 38b in the explanation of the test apparatus 300 of Embodiment 3, and accordingly, a functional description thereof will be omitted here.

As described above, in the test apparatus 400 of FIG. 7, it becomes possible to use the same correction circuit 301 in the tests of both of the GSM and the EDGE.

Note that, though the test apparatus capable of the tests for the GSM and the EDGE has been shown in each of the above-described embodiments, the communication mode to which the test apparatus of the present invention is applied is not limited to these. Specifically, if the filters for use in one of the communication modes are the filters obtained as the main component (first component) and the second component when a predetermined operation is performed for the other communication mode, then a similar effect to that of the test apparatus of the present invention can be obtained.

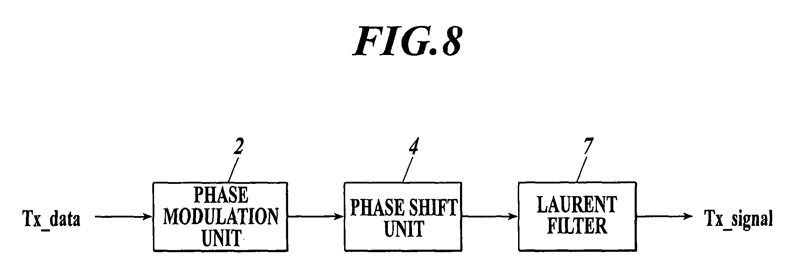

The GMSK and the 8-PSK for use in the GSM/EDGE standards can be created by a modulation circuit substantially similar to that of FIG. 1 described above, in which the phase modulation unit 2, the phase shift unit 4, and the Laurent filter 7 (7a and 7b) are connected in series as shown in FIG. 8. Specifically, FIG. 8 shows the I-Q components in a lump with regard to the main configuration for the purpose of simplifying the following description. Actually, as shown in FIG. 1, the signal outputted from the phase shift unit 4 is split into the I-Q components by the I-Q signal splitting unit 5, inputted to the Laurent filters 7a and 7b, and synthesized by the synthesizing unit 12 through the amplifiers 8a and 8b, and the like.

Differences of the above-described GMSK and 8-PSK from the usual PSK modulation are:

1) that the symbol rotation is added; and
2) that the inter-symbol interferences are generated by the filters.

In order to demodulate the signals according to these GMSK and 8-PSK, it is necessary to regenerate symbol timing with good accuracy. However, according to a method similar to the usual PSK demodulation, the symbol timing cannot be detected owing to the inter-symbol interferences generated at the time of the modulation.

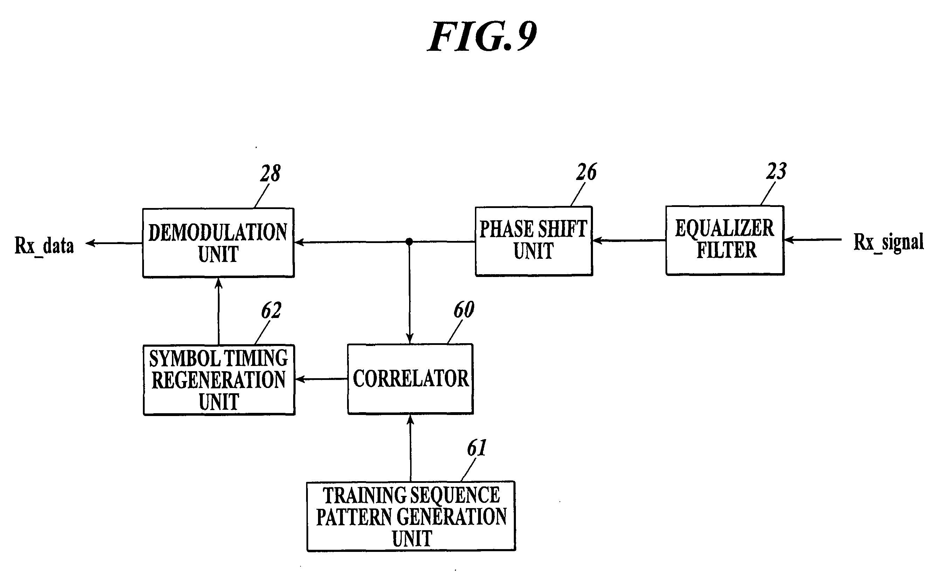

However, the symbol timing can be regenerated with good accuracy by using a demodulation circuit configured as shown in FIG. 9. FIG. 9 is a configuration block diagram showing main portions of the demodulation circuit, in which the same reference numerals are assigned to portions common to those in FIG. 2. Specifically, FIG. 9 shows the I-Q components in a lump with regard to the main configuration of the demodulation circuit for the purpose of simplifying the following description. Actually, as shown in FIG. 2, the received signal is split into the I-Q components by the I-Q signal splitting unit 21 through the A/D converter 20, inputted to the equalizer filters 23a and 23b through the downsampling units 22a and 22b, synthesized by the I-Q signal synthesizing unit 24, phase-shifted by the phase shift unit 26, and demodulated by the demodulation unit 28 through the downsampling unit 27.

In FIG. 9, the phase shift unit 26 is connected to an output terminal of the equalizer filter 23 (23a and 23b). The demodulation unit 28 and a correlator 60 as a correlation detection unit are connected to an output terminal of the phase shift unit 26. An output terminal of a training sequence pattern generation unit 61 is connected to the correlator 60. A symbol timing regeneration unit 62 is connected to an output terminal of the correlator 60. An output terminal of the symbol timing regeneration unit 62 is connected to the demodulation unit 28.

In the configuration of FIG. 9, the equalizer filter 23 removes inter-symbol interferences of Rx_signal. The phase shift unit 26 reversely rotates Rx_signal, and thus removes the symbol rotation of Rx_signal. The correlator 60 detects a correlation between a pattern of Rx_signal from which the symbol rotation is removed by the phase shift unit 26 and the known pattern outputted from the training sequence pattern generation unit 61. The symbol timing regeneration unit 62 detects timing when a value of the correlation becomes the maximum, and thus regenerates the symbol timing. By these respective units, the operations performed at the time of the modulation are removed. As a result, the demodulation unit 28 can output Rx_data obtained by demodulating Rx_signal as the one according to the usual BPSK(=GMSK) and the 8-PSK.

The demodulation circuit of FIG. 9 is used. Thus, it becomes possible to demodulate, in the same circuit, the modulation signals according to both of the GMSK and the 8-PSK, which are used in the GSM/EDGE standards, only by changing the circuit parameters such as the reverse rotation amount added by the phase shift unit 26 and the known pattern outputted from the training sequence pattern generation unit 61.

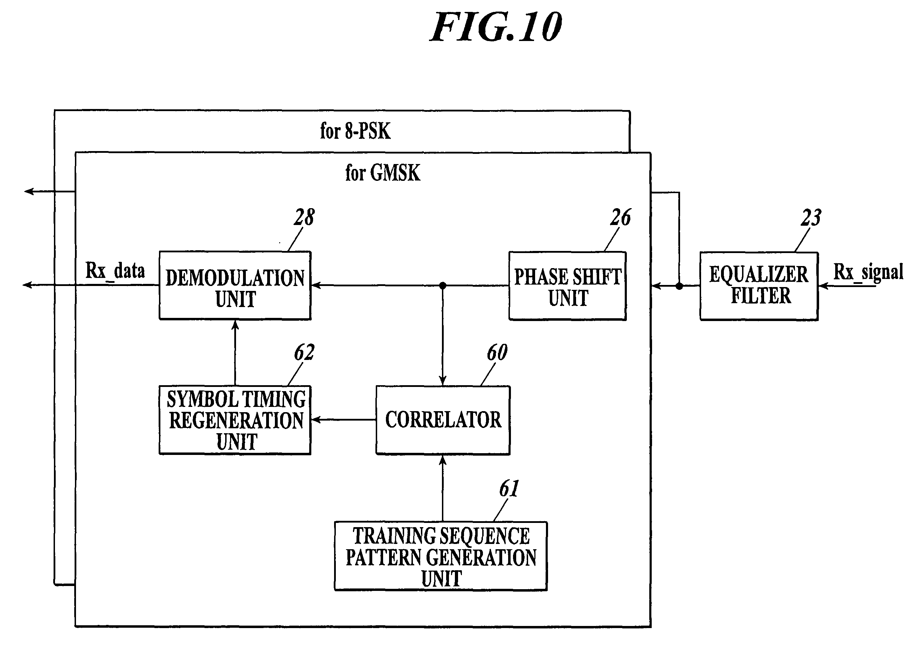

In the example of FIG. 9, the description has been made of the case where the parameters of the demodulation circuit are changed. However, as shown in FIG. 10, a configuration is adopted, in which demodulation circuits corresponding to the respective parameters of the GMSK and the 8-PSK are provided in parallel, thus making it possible to appropriately demodulate input signals without being conscious of types thereof even if it is unknown which of the GMSK and the 8-PSK each input signal accords to.

Moreover, a configuration in which the parameters of the phase shift unit 26 and the training sequence pattern generation unit 31 in the demodulation circuit of FIG. 9 are changed in a time division manner, is adopted. As a result, it is possible to appropriately demodulate the input signals even if it is unknown which of the GMSK and the 8-PSK each input signal accords to in a circuit scale smaller than that of the parallel configuration of the demodulation circuit of FIG. 10. At the same time, it is identified which of the GMSK and the 8-PSK each parameter accords to, the parameter being the one at the timing when the correlation value becomes the maximum. As a result, it is possible to correctly detect which of the GMSK and the 8-PSK each input signal accords to.

The features disclosed in the foregoing description, in the claims and/or in the accompanying drawings may, both separately and in any combination thereof, be material for realising the invention in diverse forms thereof.

**Claims**

1. A test apparatus, comprising:

   a phase modulation unit for receiving a test signal of a communication mode of a test target among a plurality of different communication modes, and modulates the received test signal by a phase modulation mode for use in the communication mode of the test target;
   a phase shift unit for shifting a phase of the modulated signal by a predetermined amount corresponding to the communication mode of the test target, with respect to each input of the modulated signal;
   a splitting unit for splitting the shifted signal into an I-component and a Q-component;
   a filter unit for shaping respective signals of the I-component and the Q-component by using a predetermined filter; and
   a synthesizing unit for synthesizing the shaped signals of the I-component and the Q-component, and for forming the synthesized signals into a transmission signal,

   wherein the predetermined filter for use in the filter unit is a filter for use in one of the plurality of different communication modes, and is a filter obtained as a main component when a predetermined operation is performed for modulation signals for use in another communication mode.

2. The test apparatus as claimed in claim 1,
   wherein the predetermined filter for use in the filter unit is a Laurent filter obtained as a main component of Laurent decomposition of a GMSK signal.

3. The test apparatus as claimed in any one of claims 1 and 2, further comprising: a normalization unit for normalizing amplitudes of the I-component and the Q-component which are processed by the filter unit.

4. The test apparatus as claimed in claim 3,
   wherein the normalization unit outputs values obtained by dividing the I-component and the Q-component by an absolute value of a complex signal obtained by synthesizing the I-component and the Q-component, as signals in which the amplitudes are normalized.

5. The test apparatus as claimed in claim 2, further comprising:

   a correction circuit for calculating correction values of output signals of the Laurent filter by using a filter obtained as a second component of the Laurent decomposition of the GMSK signal; and
an addition unit for adding the correction values calculated by the correction circuit to the output signals of the Laurent filter.

6.  A test apparatus, comprising:

a splitting unit which is a filter for use in one of a plurality of different communication modes, the splitting unit receiving a test signal in which an I-component and a Q-component are shaped, synthesized and transmitted by a first filter obtained as a main component when a predetermined operation is performed for modulation signals for use in another communication mode, or receiving another test signal which is equated to the test signal, each of the test signal and the another test signal being a signal of a communication mode of a test target among the plurality of different communication modes, and splitting the received test signal into the I-component and the Q-component;
a filter unit for removing inter-symbol interferences for respective signals of the split I-component and Q-component by using a second filter;
a synthesizing unit for synthesizing the respective signals of the I-component and the Q-component which are shaped by the filter unit;
a phase shift unit for shifting a phase of the synthesized signal by a predetermined amount corresponding to the communication mode of the test target, with respect to each input of the signal synthesized by the synthesizing unit; and
a demodulation unit for demodulating the shifted signal in a phase modulation mode for use in the communication mode of the test target,

wherein the second filter is a common filter among the plurality of different communication modes.

7.  The test apparatus as claimed in claim 6,
wherein the first filter is a Laurent filter obtained as a main component of Laurent decomposition of a GMSK signal.

8.  The test apparatus as claimed in any one of claims 6 and 7, further comprising:

a correlation detection unit for detecting a correlation between a pattern of the signal shifted by the phase shift unit and a known pattern; and
a symbol timing regeneration unit for regenerating symbol timing by detecting timing when a value of the detected correlation becomes the maximum,

wherein the demodulation unit demodulates the shifted signal based on the regenerated symbol timing.

9.  The test apparatus as claimed in claim 8,
wherein a parameter of the phase shift unit and the known pattern inputted to the correlation detection unit are changed in response to the different communication modes.

10. The test apparatus as claimed in claim 8,
wherein the demodulation unit comprises the phase shift unit, the correlation detection unit, the symbol timing regeneration unit, and the demodulation unit, and
a plurality of the demodulation circuits in which the parameters of the phase shift units and the known patterns inputted to the correlation detection units are set in response to the different communication modes are provided in parallel.

# FIG.1

# FIG.2

EP 1 758 282 A1

# FIG.3

Point:8500

# FIG.4

200

TEST SIGNAL GENERATION UNIT (1) → PHASE MODULATION UNIT (2) → PHASE SHIFT UNIT (4) → I-Q SIGNAL SPLITTING UNIT (5)

PHASE CALCULATION UNIT (3) → PHASE SHIFT UNIT (4)

I → UPSAMPLING UNIT (6a) → LAURENT FILTER (7a) → 8a

Q → UPSAMPLING UNIT (6b) → LAURENT FILTER (7b) → 8b

UPSAMPLING UNIT (9a) → UPCONVERSION FILTER (10a) → 11a

UPSAMPLING UNIT (9b) → UPCONVERSION FILTER (10b) → 11b

NORMALIZATION UNIT (14) → SYNTHESIZING UNIT (12)

I-Q CONSTELLATION DISPLAY UNIT (13)

OUTPUT IF OF TRANSMISSION SIGNAL

EP 1 758 282 A1

# FIG.5

Point:1550

# FIG.6

# FIG.7

400

PHASE MODULATION UNIT 2

| M | | |
| D2 | $d_{3i+2}$ | |
| D1 | $d_{3i+1}$ | |
| D0 | $d_i/d_{3i}$ | |

PHASE SHIFT UNIT 4

I-Q SIGNAL SPLITTING UNIT 5

PHASE CALCULATION UNIT 3

rotate → + 41 → D Q 42

6a UPSAMPLING UNIT

7a LAURENT FILTER

40a + I

6b UPSAMPLING UNIT

7b LAURENT FILTER

40b + Q

mode

50 D Q

51 EXOR

CORRECTION CIRCUIT 301

| | mode | rotate |
|---|---|---|
| GSM | 0 | $\pi/2$ |
| EDGE | 1 | $3\pi/8$ |

| SEL | OUT |
|---|---|
| 0 | A |
| 1 | B |

52a D Q CLR

53a D Q CLR

54a X

55a A B SEL OUT Q

37b UPSAMPLING UNIT

38b CORRECTION FILTER

-1

52b D Q CLR

53b D Q CLR

54b X

55b A B SEL OUT I

37a UPSAMPLING UNIT

38a CORRECTION FILTER

EP 1 758 282 A1

# FIG.8

Tx_data ———→ | PHASE MODULATION UNIT (2) | ———→ | PHASE SHIFT UNIT (4) | ———→ | LAURENT FILTER (7) | ———→ Tx_signal

# *FIG.9*

# FIG.10

for 8-PSK

for GMSK

Rx_data ← **DEMODULATION UNIT** *28*

**PHASE SHIFT UNIT** *26*

**EQUALIZER FILTER** *23* ← Rx_signal

**SYMBOL TIMING REGENERATION UNIT** *62*

**CORRELATOR** *60*

**TRAINING SEQUENCE PATTERN GENERATION UNIT** *61*

EP 1 758 282 A1

European Patent
Office

**EUROPEAN SEARCH REPORT**

Application Number

EP 06 01 7351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/019847 A (ROHDE & SCHWARZ [DE]; VOHRER MICHAEL [DE]) 3 March 2005 (2005-03-03) * abstract; figure 3 * * page 1, line 26 - line 29 * * page 6, line 24 - page 10, line 30 * ----- | 1,6 | INV. H04B17/00 G01R31/28 |
| A,D | JP 09 321717 A (ANRITSU CORP) 12 December 1997 (1997-12-12) * abstract * ----- | 1,6 | |
| A | JP 11 274997 A (TOKYO SHIBAURA ELECTRIC CO) 8 October 1999 (1999-10-08) * abstract * ----- | 1,6 | |
| | | | TECHNICAL FIELDS SEARCHED (IPC) H04B G01R |

The present search report has been drawn up for all claims

| Place of search | Date of completion of the search | Examiner |
|---|---|---|
| Munich | 11 January 2007 | LOPEZ DE ECHAZARRETA |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 06 01 7351

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2007

| Patent document cited in search report | | Publication date | Patent family member(s) | | Publication date |
|---|---|---|---|---|---|
| WO 2005019847 | A | 03-03-2005 | DE | 10337913 A1 | 17-03-2005 |
| | | | EP | 1656565 A1 | 17-05-2006 |
| JP 9321717 | A | 12-12-1997 | JP | 3017955 B2 | 13-03-2000 |
| JP 11274997 | A | 08-10-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3017955 B

- JP 2005012274 A